**Europäisches Patentamt**

**European Patent Office**

**Office européen des brevets**

(19)

(11) **EP 1 329 736 A2**

(12) **EUROPEAN PATENT APPLICATION**
published in accordance with Art. 158(3) EPC

(43) Date of publication:
**23.07.2003 Bulletin 2003/30**

(51) Int Cl.7: **G01S 1/00**

(21) Application number: **99949481.8**

(22) Date of filing: **17.06.1999**

(86) International application number:
**PCT/RU99/00202**

(87) International publication number:
**WO 01/009634 (08.02.2001 Gazette 2001/06)**

(84) Designated Contracting States:
**DE FR GB SE**

(71) Applicant: **SAMSUNG ELECTRONICS CO. LTD.**
**Suwon-city, Kyungki-do (KR)**

(72) Inventors:
- **ROG, Andrei Leonidovich**
  **Moscow, 107143 (RU)**
- **MALASHIN, Viktor Ivanovich**
  **St.Petersburg, 195273 (RU)**
- **IVANOV, Vladimir Nikolaevich**
  **St.Petersburg, 195297 (RU)**
- **POVERENNY, Denis Georgievich**
  **St.Petersburg, 195297 (RU)**

- **SILIN, Mikhail Jurievich**
  **Moscow, 105094 (RU)**
- **PISAREV, Sergei Borisovich**
  **St.Petersburg, 198152 (RU)**
- **FEDOTOV, Boris Dmitrievich**
  **St.Petersburg, 195213 (RU)**
- **SHEBSHAEVICH, Boris Valentinovich**
  **St.Petersburg, 190121 (RU)**

(74) Representative: **Neill, Alastair William et al**
**Appleyard Lees**
**15 Clare Road**
**Halifax West Yorkshire HX1 2HY (GB)**

(54) **PORTABLE GPS RECEIVER FOR A PERSONAL SAFETY SYSTEM**

(57) The portable GPS-receiver for a system of personal safety having such attributes, as diminished power consumption, overall dimensions and weight, because the input unit contains the multichannel digital correlator with N = by 8 to 12 channels of parallel processing connected with the microprocessor equipped with permanent storage unit for storage of the programs of signal processing and operative storage for data storage by activity in a standard mode without interlock of GPS signals, thus the microprocessor of the output unit is connected by trunks of a data exchange to the former of clock signals and heterodyne frequencies of an input unit, with an input-output unit of the data, with the transceiver unit and in addition provided with the permanent storage unit for storage of the programs of signal processing and operative storage for data storage and samples of the multichannel digital correlator for operation in conditions of interlock of GPS signals, and each of N of channels of the multichannel digital correlator is equipped with K inphase and Ko quadrature correlators, where K = 20 to 40, connected with the appropriate storage units ensuring a capability of a simultaneous correlation of GPS signals with K copies of C/A code, shifted on half of digit of C/A GPS code , and coherent accumulation of results of a correlation on an interval equal to duration of epoch of C/A code.

Fig. 1

**Description**

*Technical Fields*

The invention relates to the field of a radio navigation, and, more specifically, to technical systems of personal safety, which allow the position-fix based on signals of a satellite radio navigational system "GPS" and message passing about position along with the messages on an emergency situation to a base monitoring station.

*Prior Engineering Art*

The systems of personal safety, considered here, are versions of systems of tracking of objects used in monitoring (tracking) or control. The development of this branch - the branch dealing with the observation of location of people, is justified by a prospect of development of receivers of GPS signals with such overall dimensions, weight and power consumption, that would allow construction of probable GPS receivers with personal means of mobile radio communication. Thus the task of minimization of overall dimensions, reduction of power consumption and simplification of receivers executing a position-fix on GPS signals, is one of most important.

The systems of tracking of objects, for example of vehicles (see application of Germany (DE) [1] 3501035, Int. Cl. G08 G 1/00,publ.17.07.86 [1], application EPO (EP) [1] 0379198, Int. C1.. G01 S 5/02, G01 S 5/14, publ.25.07.90 [2], application EPO (EP) [1] 0509775, Int. Cl. G01 S 5/14, publ.15.04.92 [3] and patent of USA (US) [1] 5319374, Int. Cl. G01 S 1/24, G01 S 5/02, G01 S 3/02, G04 C 11/02, publ.07.06.94 [4]), are known, in which traced object - a vehicle - is supplied with the unit for a position-fix on GPS signals and equipment for radio communication with a central station, which carries out monitoring of the position of transport.

The systems are known, which track vehicles on GPS signals and, in case of an extreme situation, transmit the data about position to a tracking station (see, for example, application of Germany (DE) [1] 3839959, Int. Cl. G08 B 25/00, G08 G 1/123, B60 Q 9/00, H04 Q 7/00, publ.12.04.90 [5], patent of USA (US) [1] 5355140, Int. Cl. G01 S 1/08, G01 S 5/02, publ. 11.10.94 [6] and application PCT (WO) [1] 93/16452, Int. Cl. G08 G 1/123, publ. 19.08.93 [7]).

In the considered systems of tracking and scheduling of vehicles [1 - 7] for a position-fix the standard receivers of GPS signals, equipped by additional units ensuring data transmission about site, and also alarm signals of a radio channel on station of tracking are used. As a rule, in such systems the receivers of GPS signals are not supposed to perform with strict requirements to minimization of the equipment and the power saving, and the tasks of a position-fix in conditions of partial blocking of a signal reception GPS are overcome, for example, by an integration with elements of inertial systems.

As against transport, in systems of personal safety to receivers of GPS signals, operating for a position-fix, the additional requirements can be showed. On the one hand, it is justified by the necessity of accommodation of the receiver of GPS signals in a body of a radiophone (see, for example, Application EPO (EP) [1] 0528090, Int. Cl. G01 S 5/00, publ. 24.02.93) [8]. It esults in necessity to minimize means of receiving GPS signals and their power consumption. On the other hand, the requirements may be specified on provision of a position-fix in conditions of partial interlock of GPS signals, for example in operation conditions " under foliage ", using thus only radio signals received from the air.

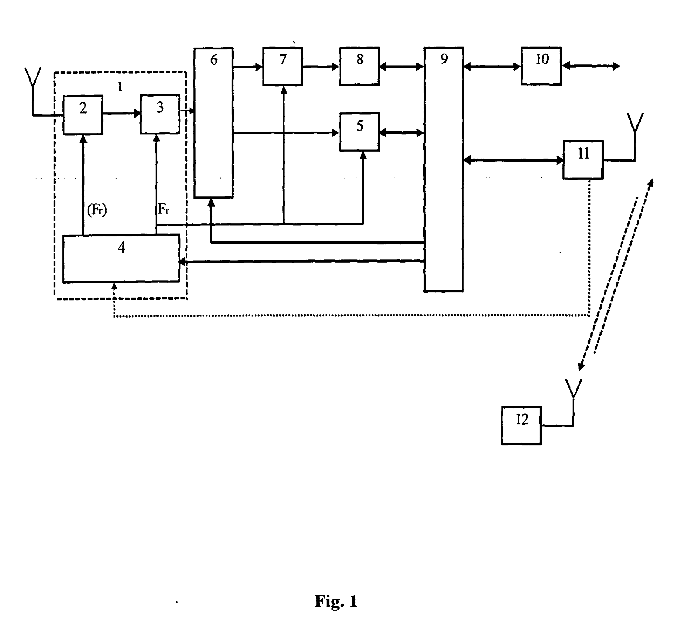

The receiver of GPS signals with communication channel for message passing about extreme situations (see application PCT (WO) [1] 97/14057, Int. Cl. G01 S 5/14, G01 S 1/04, publ.17.04.97) [9], is known in which the additional means ensuring a capability of a position-fix on GPS signals in conditions of their partial interlock are stipulated. The receiver described in [9], is selected as the prototype. The generalized skeleton diagram of the receiver adopted as the prototype, is shown on Fig.1.

The receiver - prototype, see Fig.1, contains an input unit 1 of conventional receiver of GPS signals, including sequentially connected radio frequency converter of signals 2, which input is also an input of the unit 1, and unit 3 for analog-to-digital conversions of signals, which output is also an output of the unit 1, and also former 4 for signals clock and heterodyne frequencies control and which reference inputs are according to control and reference inputs of the unit 1, thus a heterodyne input of the radio frequency converter 2 and clock input of the unit 3 are connected accordingly to heterodyne and clock outputs of the former 4.

The former 4 is supplied with means for formation of signal clock and heterodyne frequencies, for example, synthesizers of frequencies, the inputs of which pre-set form a control input of the former 4. The synthesizers of frequencies work from the reference generator which is included in a structure of the former 4. In a case, where in the receiver the tuning of frequency of the reference generator by an external high-stable signal is provided, the reference generator is supplied with the appropriate tuning unit, for example by unit PAAF, which reference input forms an input of (reference input)synchronization former 4.

The receiver - prototype contains also output unit 5 of the conventional receiver of GPS signals, which signal input through the switch 6 is connected to an output of the unit 3, and the clock input is connected to a clock output of the former 4.

To the second output of the switch 6 are connected sequentially joint memory unit 7 for storage of samples of values of signals shaped by the unit 3, and signal processor 8. The clock input of the memory unit 7 is connected to a clock output of the former 4.

Control input of the former 4, control input of the switch 6, and also the inputs - outputs of the data of the signal processor 8 and unit 5 are connected by the appropriate data buss to the decision-making unit 9, in which structure the microprocessor for data processing, controller and memory unit for storage of the programs and data enters.

The decision-making unit 9 is connected to the unit 10 input-outputs of the data and with the transceiver unit 11, executing reception of both signaling and data through the communication channel linking the receiver to a base station 12. In that case, when in the former 4 the tuning (synchronization) of the reference generator by an external signal is used, the output of a reference signal (signal of synchronization) transceiver unit 11 incorporates with the appropriate input of the former 4 (on Fig.1 this connection is shown by a dotted line).

The unit 10 of input-outputs of the data can be realized, for example, as the appropriate controller, keypad, or the display and is supplied with the interface connector.

The transceiver unit 11 is realized as the modem and transceiver maintaining radio communication with a base station 12.

The base station 12 is supplied with means for a signal reception of an alarm and locating information of the receiver, and also means for own formation of the ephemeral data, rough coordinate information on position of the receiver, data of Doppler shift and means for transmission of these data through a radio channel to the unit 11. Besides, the base station 12 can be supplied with means for implementation of transmission of a reference signal for the said tuning of frequency of the reference generator of the receiver.

The receiver - prototype operates as follows. The GPS signals from an output of a receive antenna go to an input of the radio frequency converter 2 input units 1, where the signal conditioning with downturn of frequency takes place. Thus the mixers which are included in a structure of the converter 2, working on heterodyne signals (Fr), coming from the appropriate outputs of the former 4 are used.

The former 4 synthesizes clock signals (Ft) and heterodyne (Fr) of frequencies, using for this purpose a signal of a reference frequencies shaped by the reference generator, included in a structure of the former 4. The pre-set of values of frequencies, shaped by synthesizers, is effected by applying to control inputs of synthesizers of the appropriate adjusting codes shaped by the unit 9.

From an output of the radio frequency converter 2 signals go to an input of the unit 3 analog-to-digital conversions of a signal, where they will be converted to a digital kind. The sampling rate on time at analog-to-digital conversion is determined by a cadence (Ft), coming from a clock output of the former 4. The output signals of the unit 3 form output signals of an input unit 1.

From an output of an input unit 1 signals go to an input of the switch 6, which operates under the influence of a control signal shaped unit 9.

In a usual mode, i.e. in at absence of interlock of GPS signals, the switch 6 executes connection of the unit 1 with the unit 5, which executes conventional correlation processing of adopted GPS signals, including searching for of signals on frequency and delay, tracking a code, frequency and phase bearing of signals, extraction and decoding of a service information about ephemerises, extraction of the navigational information (determination of radio navigational parameter - RNP). In particular, thus the determination of a temporal position of peaks of correlation functions of noise signals of visible satellites used in the unit 5 in calculations of site implements. The correlation processing in the unit 5 implements with a clock rate determined by a cadence (Ft), coming from a clock output of the former 4.

The locating information goes through the controller of the decisive unit 9 to the unit 10 responsible for input-outputs of the data, where, for example, they are represented on the display.

The locating information goes also to the transceiver unit 11, which, in a communication session with a base station, transmits to a base station 12 locating information and, in case of an extreme situation, message on an extreme situation - alarm signal, which is shaped by means of the unit 10 and controller of the unit 11.

On a base station 12 the formation of the ephemeral data, rough coordinate information on position of the receiver and data of Doppler shift takes place, which through communication channel in communication sessions are transmitted to the transceiver unit 11. These data are used in operation of the receiver in an adverse conditions of reception at a bad signal to noise ratio (i.e. in conditions of interlock of GPS signals).

In the said adverse conditions of a reception (in conditions of interlock of GPS signals) the switch 6 connects an output of the unit 1 to an input of the memory unit 7, executing storage of samples of values of signals shaped by the unit 3.

The switching of the switch 6 will be performed through a signal shaped by the unit 9, for example, by results of unsuccessful searching for signals in the unit 5 or on a signal of the operator coming from the unit 10.

The unit 7 executes preliminary memorizing of all samples of values of signals shaped by the unit 3, on an interval about 1 second, i.e. $(2 \div 4) \, 10^6$ samples. The stored samples of values of signals go to unit 7 with a clock rate determined by a cadence (Ft), coming from a clock output of the former 4, i.e. with frequency (2 through 4) MHz.

From the memory unit 7 samples are used many timed by the signal processor 8, which executes, by purely software means, correlation processing of received GPS signals and determines a temporal position of a maximum of a correlation function for a signal of each satellite, i.e. its pseudo-range. The measured pseudo-ranges go to the processor of the unit 9, where the position-fix takes place. Thus, for implementation of correlation processing and the position-fix in the said adverse conditions of reception are used the ephemerical data, rough information on position (to within ±150 kms) and Doppler shifts of carrier frequencies of satellites obtained by the unit 9 on communication channel from a base station 12. Besides with the help of a clock signal transmitted by a base station 12, or the tuning of frequency of the reference generator of the former 4 (about what implements was spoken above), or the frequency drift of the reference generator from a rated value is measured.

The locating information determined in the unit 9, go to the unit 10 for indication, and also in the unit 11 for transmission to the base station 12, dealing with tracking the receiver. Together with a locating information on a base station, if necessary, the messages on extreme situations - alarm signals are transmitted which are shaped by means of the unit 10 and are transmitted through a communication channel to a base station 12 with the help of the unit 11.

Thus receiver - prototype provides a capability of locating and alarming with a locating information both in a normal conditions of GPS signal reception, and in conditions of their interlock, that determines a capability of its use in systems of personal safety.

The realization of the said functions in the receiver - prototype was implemented at the expense of its essential complication in comparison with conventional receivers of GPS signals. So, except for usual units 1 and 5, signals, used in conventional receivers, GPS, in the receiver-prototype the decision-making unit 9 and signal processor 8, implemented on the basis of a fast-response microcomputer, and also the memory unit 7, implemented on the basis of a fast-response RAM of a high capacity for storage of samples, which, as a rule, is characterized by high power consumption and cost. All these contribute to big overall dimensions, weight, power consumption and cost of the receiver.

*Disclosure of the Invention*

The problem, on which solution the alleged invention is directed, is the creation of a receiver of GPS signals for a system of personal safety, which, in comparison with the prototype, differs by ease of realization, has lower power consumption, smaller overall dimensions and weight, smaller cost, at the same time, all functions of the receiver - prototype and about the same characteristics on a position-fix in an adverse conditions of a signal reception GPS are realized.

The essence of the invention consists that in the receiver of GPS signals for a system of personal safety containing sequentially joint input and output units of the conventional receiver of GPS signals, input-output unit of the data and transceiver unit intended for a reception and a signaling and the data on communication channel, linking the receiver to a base station, the output of which reference signal is connected to a reference input of an input unit, the clock input of the output unit is connected thus to a clock output of an input unit, the input unit contains sequentially joint radio frequency converter, which signal input is a signal input of an input unit, and unit of analog-to-digital conversion of signals, which output is a signal output of an input unit, and also the former of signals clock and heterodyne frequencies, which reference input is a reference input of an input unit, The heterodyne output of the former of clock signals and heterodyne frequencies is connected to a heterodyne input of the radio frequency converter of signals, and the clock output being a clock output of an input unit, is connected to a clock input of the unit of analog-to-digital conversion of signals, as the output unit of the conventional receiver of GPS signals the unit containing multichannel digital correlator where N = 8 through 12 channels of parallel processing linked with the microprocessor equipped with permanent storage for the programs of signal processing and operative storage for data storage is used in a standard mode of activity without interlock of GPS signals, wheras the microprocessor of the output unit is connected by trunks of a data exchange to the former of signals clock and heterodyne frequencies of an input unit, with an input-output unit of the data, with the transceiver unit and with the additional unit for permanent storage of the programs of signal processing and operative storage for data storage and samples of the multichannel digital correlator for operatio in conditions of interlock of GPS signals, and each of N of channels of the multichannel digital correlator is equipped with K inphase and K quadrature correlators, where K = 20 through 40, connected with the appropriate storage units ensuring a capability of a simultaneous correlation of GPS signals with K copies of C/A code, shifted on half of digit C/A of a GPS code, and coherent accumulation of results of a correlation on an interval equal to duration of epoch of C/A code.

In this particular case, the receiver is designed in such a way that each of channels of the multichannel digital correlator contains the digital controlled generator of carrying frequency, register of control, digital controlled generator of a code, generator reference C/A of GPS code, programmed delay line, first and second digital mixers accordingly of inphase and quadrature channels of processing, first and second groups of K inphase and quadrature correlators, which first inputs are connected to outputs of the appropriate digital mixers, the second inputs are connected to the appropriate outputs of a programmed delay line, and the outputs are connected to signal inputs of the appropriate storage units, and also unit of a data exchange linking the outputs of storage units, control input of the digital controlled generator of carrying frequency, control input of the register of control control input of the digital controlled generator of a code and first input of the generator of reference C/A code with the microprocessor of the output unit, whereas the signal inputs, linked with each other, of digital mixers form a signal input of the channel, the clock inputs of the controlled digital generator of carrying frequency, the input of the digital controlled generator of a code of a programmed delay line and the inputs of storage units form a clock input of a channel, the second inputs of the first and second digital mixers are connected accordingly to the first and second outputs of the digital controlled generator of carrying frequency, the signal and control inputs of a programmed delay line are connected accordingly to an output of the generator of reference C/A of the GPS code and to the first output of the register of control, the second output of the register of control is connected to the second input of the generator of reference C/A of the GPS code, and the third input of the generator of reference C/A of the GPS code is connected to an output of the digital controlled generator of the code, whereas, in the multichannel digital correlator, the signal inputs of channels, linked with each other, and the clock inputs of channels, also linked with each other, form, accordingly, the signal and clock inputs of the multichannel digital correlator.

*The description of figures of the drawings*

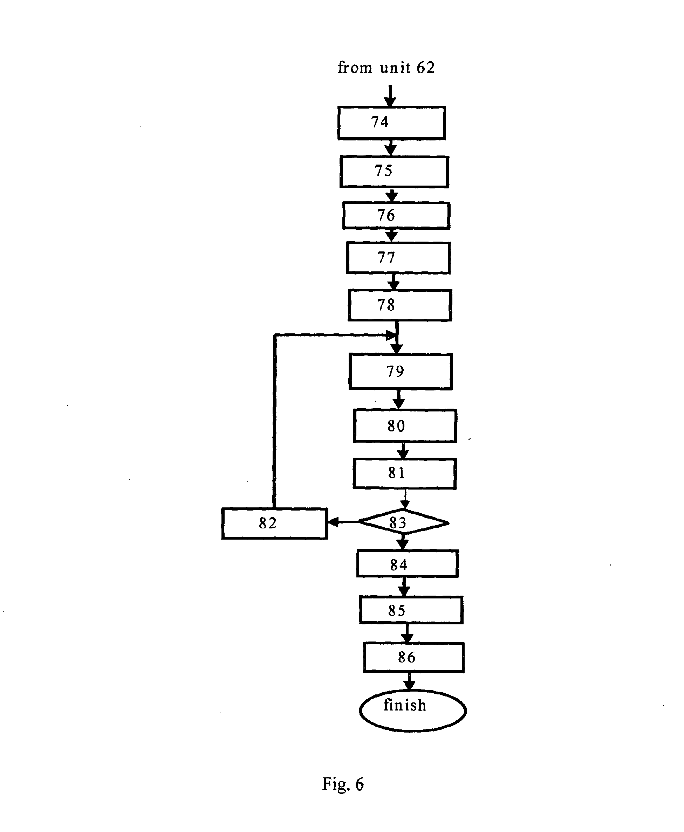

The essence of the claimed invention and its industrial applicability are illustrated by the drawings, shown on Figs.1 to 6.

On Fig.1 the generalized skeleton diagram of the receiver-prototype is shown;
On Fig.2 the generalized skeleton diagram of the claimed receiver is shown;
On Fig.3 is shown the structural diagram of one channel of the multichannel digital correlator implemented in the case under consideration;
On Fig.4 one can see the block-diagram of algorithm of signal processing used in the claimed receiver during operation in a usual mode, i. e. in absence of interlock of GPS signals;
On Fig.5 the block-diagram of algorithm of signal processing used in the claimed receiver in conditions of interlock of GPS signals, which happend in the course of receiver operation, is shown;
On Fig.6 the block-diagram is represented, of algorithm of signal processing used in the claimed receiver at the beginning of activity in conditions of interlock of GPS signals.

*Preferable mode of realization of the invention*

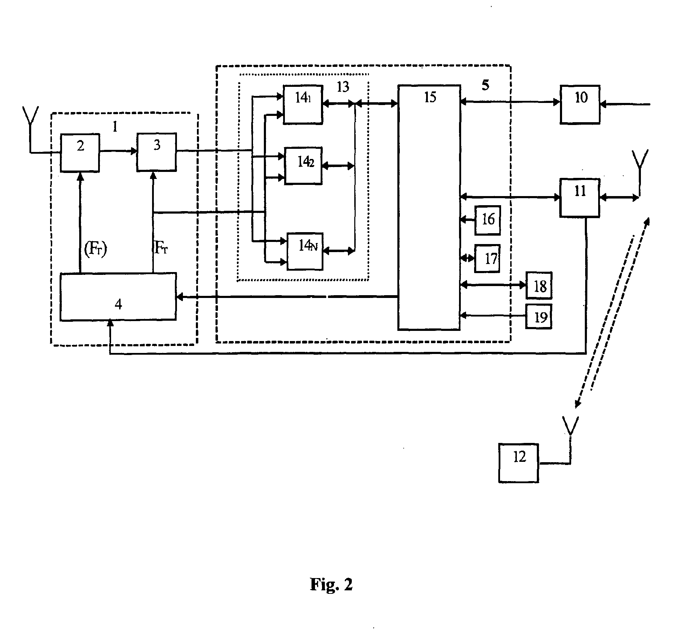

The claimed receiver contains (see Figs.2-3) an input unit of 1 conventional receiver of GPS signals, including sequentially connected radio frequency converter of signals 2, which signal input is a signal input of the unit 1, and unit 3 analog-to-digital conversions of signals, which output is a signal output of the unit 1, and also former 4 of clock signals and heterodyne frequencies, which reference input is a reference input of the unit 1, whereas a heterodyne input of the radio frequency converter 2 and clock input of the unit 3 are connected accordingly to heterodyne and clock outputs of the former 4.
The former 4 is supplied with means for formation of clock signals and heterodyne frequencies, for example, synthesizers of frequencies. The synthesizers of frequencies work from the reference generator which is included in a structure of the former 4. The reference generator used in the former 4, is supplied, for example, unit of a PLL , with which help will be determined the shift of its frequency in relation to the frequency of an external high-stable reference signal. This shift characterizes deviation of frequency of the reference generator from a rated value. In presence of the said unit PLL the reference generator can be made as a simple, not compensated chip. The reference input of the unit PLL forms a reference input of the former 4, output of the unit PLLF, on which the data about deviation of frequency of the reference generator from a rated value are shaped, and the inputs of a pre-set of synthesizers form an input - output of the data of the former 4. Alternatively, the PLLF unit (synchronization) of frequency of the reference generator of the receiver implements the fine tuning pursuant to an external high-stable reference signal. In this case data about deviation of frequency of the reference generator in the former 4 are not shaped, and in the considered below algorithms of activity the deviation of frequency of the reference generator from a rated value is taken as zero.
The claimed receiver also contains the output unit 5 of the conventional receiver of GPS signals, signal and which clock inputs are connected to a signal and clock output of the unit 3, and also connected with the unit 5 units 10 input-outputs of the data and transceiver unit 11, intended for a reception both signaling and data on communication channel linking the receiver to a base station 12, thus the output of a reference signal of the transceiver unit 11 is connected to a reference input of an input unit 1, i.e. with a reference input of the former 4.
The unit 10 input-outputs of the data is realized, for example, as the appropriate controller, keypad, or display and is supplied with the interface connector.

The transceiver unit 11 is realized as the modem and transceiver executing on a radio channel the communication of the receiver with a base station 12.

The base station 12 is supplied with means for reception of the messages about extreme situations (alarm signals) and locating information of the receiver, and also means for own formation of the ephemerical data, rough coordinate information on the position of the receiver, data of Doppler shift of carrier frequencies of satellites GPS and means for transmission of these data on a radio channel to the unit 11 on a high-stable carrier frequency.

As means for a reception both the transmission of the said signals and data on a radio channel the base station 12 can be equipped, for example, with an appropriate transceiver means of a base station of a cellular telephone network. In this case as the transceiver unit 11 of the claimed receiver the appropriate transceiver unit of a radiophone can be used, and receiver can be structurally located in a body of this radiophone.

In the claimed receiver as the output unit 5 of the conventional receiver of GPS signals the unit containing multichannel digital correlator 13, containing N of channels 14 ($14_1$, $14_2$, is used... $14_N$), where N = 8 through 12, intended for parallel signal processing N = of 8 through 12 GPS satellites. The signal and clock inputs of channels 14 form a signal and clock input of the correlator 13. In the unit 5 correlator 13 is connected to the microprocessor 15, equipped permanent memory storage (ROM) 16 for storage of the programs of signal processing and operational memory storage (RAM) 17 for data storage in cases where the receiver works in a standard mode - in absence of interlock of GPS signals. The absence of interlock is characterized by the relation of a signal strength to a spectral concentration of a noise exceeding threshold value 34 through 37 dBHz.

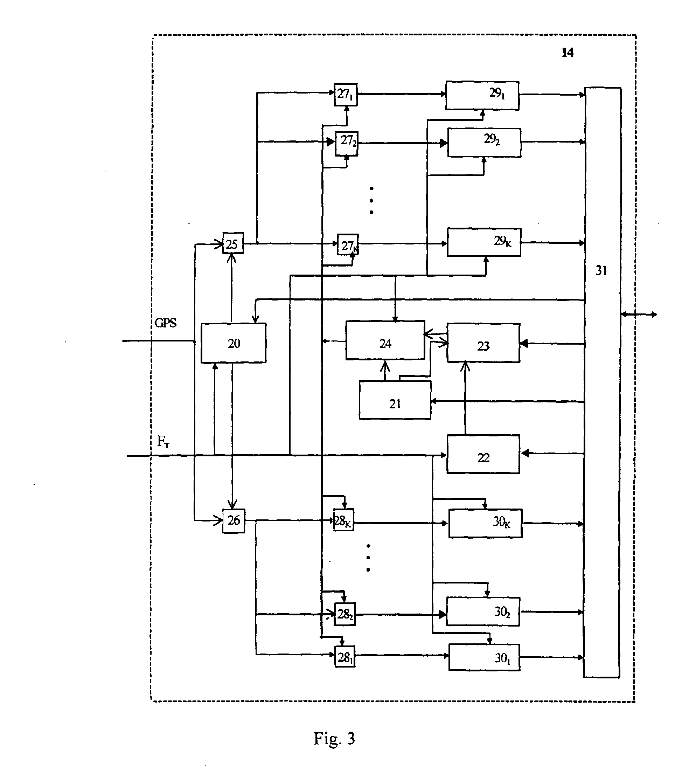

The microprocessor of 15 output units 5 is connected by trunks of a data exchange to an input - output of the data of the former 4 input units 1, with the unit 10 input-outputs of the data, with the transceiver unit 11 and in addition by gated in ROMs 18 for storage of the programs of signal processing and RAM 19 for data storage and samples of the multichannel digital correlator 13 by activity in conditions of interlock of GPS signals. Each of channels of 14 multichannel digital correlator 13 in a considered example of realization contains (Fig.3) the digital controlled generator 20 of carrying frequency, register 21 controls, digital controlled generator 22 codes, generator 23 reference C/A of a GPS code, programmed delay line 24, first and second digital mixers 25 and 26 accordingly of inphase and quadrature channels of correlation processing, first and second groups K correlators: inphase $27_1$ - $27_K$ and quadrature $28_1$ - $28_K$, where K = 20 through 40, connected with the appropriate storage units $29_1$ - $29_K$ and $30_1$ - $30_K$, and also unit 31 data exchanges linking outputs of storage units digital mixers form $29_1$ - $29_K$ and $30_1$ - $30_K$ , control input of the digital controlled generator 20 of carrying frequency, control input of the register 21, control input of the digital controlled generator 22 codes and first input of the generator 23 reference C/A of a code with the microprocessor 15.

In each of channels 14 signal inputs of digital mixers 25 and 26 are connected among themselves and form a signal input of a channel 14. Joint among themselves signal inputs of channels $14_1$ - $14_N$ form a signal input of the correlator 13.

In each of channels 14 clock inputs of the digital controlled generator 20 carrying frequency, digital controlled generator 22 codes programmed delay line 24 and storage units $29_1$ - $29_K$ and $30_1$ - $30_K$ are connected among themselves and form a clock input of a channel 14. Joint among themselves clock inputs of channels $14_1$ - $14_N$ form a clock input of the correlator 13.

The second inputs of mixers 25 and 26 are connected accordingly to the first and second outputs of the digital controlled generator 20 carrying frequency. The output of the digital mixer 25 is connected to the first inputs of correlators $27_1$ - $27_K$. The output of the digital mixer 26 is connected to the first inputs of correlators $28_1$ - $28_K$.

The outputs of correlators $27_1$ - $27_K$ and $28_1$ - $28_K$ are connected according to signal inputs of storage units $29_1$ - $29_K$ and $30_1$ - $30_K$.

The second inputs of correlators $27_1$ - $27_K$ and $28_1$ - $28_K$ are connected to the appropriate outputs of a programmed delay line 24. The signal input of a programmed delay line 24 is connected to an output of the generator 23 reference C/A of a code GPS. The control input of a programmed delay line 24 is connected to the first output of the register 21 controls. The second output of the register 21 controls is connected to the second input of the generator 23 reference C/A of a code GPS, which third input is connected to an output of the digital controlled generator 22 codes.

The claimed receiver operates as follows.

The receiver should be disposed in a zone of the clear radio communication with a base station 12. Practically, for a position-fix in all considered below cases of a signal reception GPS the receiver should be disposed within the limits of radius up to 150 km from a base station 12.

The base station 12 executes, independently from the receiver, formation of the ephemerical data, data of the rough coordinate of site of the receiver (to within $\pm150$ kms) and Doppler shifts of carrier frequencies of visible satellites GPS. These data are transmitted to the unit 11 of the receiver on a high-stable carrier frequency in sheduled communication sessions.

Generated on a base station 12 data of ephemerises, data of the rough coordinates and the data of Doppler shifts of carrier frequencies of visible satellites GPS, adopted by the unit 11 on communication channel, are used in the course of the receiver operation in the adverse conditions of a signal reception GPS (in conditions of interlock).

The high-stable carrier frequency, on which said data are transmitted, is used in the receiver as an external high-stable reference frequency, in relation to which the estimation of deviation of frequency of the reference generator of the former 4 from a rated value implements. An estimation of deviation of frequency of the reference generator from a rated value execute with the help of the appropriate unit PLL in the former 4, the data of an estimation are transmitted to microprocessor 15, where the information is stored in a RAM 19.

Alternative version is that, in which the former 4 executes fine tuning (synchronization) of frequency of the reference generator of the receiver pursuant to an external high-stable reference signal. In this case data about deviation of frequency of the reference generator in the former 4 are not shaped and not transmitted to the microprocessor 15, and in the considered below algorithms of activity deviation of frequency of the reference generator from a rated value is taken as zero.

Position-fix is executed in the claimed receiver on three algorithms depending on conditions of a signal reception GPS.

At realization of all three algorithms the GPS signals in the beginning will convert in an input unit 1. During this conversion the GPS signals, received by an antenna, go to an input of the radio frequency converter 2, where execute their conversion with reduction of frequency. Thus use mixers which are included in a structure of the radio frequency converter 2, working on heterodyne signals (Fr), coming from appropriate outputs of the former 4.

In the former 4 clock signals (Ft) and heterodyne (Fr) frequencies are synthesized with the help of synthesizers of frequencies working from a reference signal, shaped by the reference generator which is included in a structure of the former 4. A pre-set of values of frequencies, shaped by synthesizers, is done by directing of the appropriate adjusting code from the microprocessor 15. An estimation of deviation of frequency of the reference generator from a rated value execute on a high-stable reference signal coming from the transceiver unit 11 in communication sessions with a base station 12. The knowledge of deviation of frequency of the reference generator from a rated value allows to realize all functions of the claimed receiver with the help of a simple (without thermocompensation) crystal oscillator, for example of simple, not compensated chip.

From an output of the radio frequency converter 2 signals goes to an input of the unit 3 for analog-to-digital conversions of signals, where they are converted to a digital kind. The sampling rate on time at analog-to-digital conversion in the unit 3 is determined by a cadence (Ft), coming from the appropriate output of the former 4. The output signals of the unit 3 form output signals of an input unit 1.

From an output of an input unit 1 signals go to an input of the unit 5, where with the help of the multichannel digital correlator 13 and microprocessor 15, connected with a ROM 16, 18 and RAM 17, 19, and also with units 10 and 11, a position-fix is executed on the basis of received GPS signals.

In the claimed receiver the position-fix is based on processing of accumulated short - period (msec.) samples from outputs of quadrature correlators $27_1$ - $27_K$ and $28_1$ - $28_K$ in each of channels of 14 multichannel digital correlators 13. Thus in the claimed receiver a correlation is carried out by hardware means only, i.e. by means of the digital correlator 13. It distinguishes the claimed receiver from the receiver - prototype, where in an adverse conditions of a reception a correlation is carried out by means of software, i.e. by means of the signal processor 8 (Fig.1), operating accumulated samples obtained as a result of analog-to-digital conversion of GPS signals in the unit 3.

The channels 14 of the digital correlator 15 works as follows. The quantized GPS signals, obtained as a result of analog-to-digital conversion in the unit 3, are directed, in each of channels 14, to signal inputs of digital mixers 25 and 26. The digital controlled generator 20 carrying frequency works out inphase and quadrature component phases of the carrier frequency appropriate to a chosen satellite GPS, which signal is processed in the given channel. The signals shaped by the generator 20, are multiplied with an input signal in digital mixers 25 and 26.

With the help of digital mixers 25 and 26 a signal recovery of the given satellite GPS is provided, as well as the transfer of a spectrum of this signal to basic frequency band (to a zero frequency). Thus, as a result of a frequency multiplex of signals in digital mixers 25 and 26 the "removal" of carrying frequency (inphase and quadrature components of a processed signal) takes place.

The digital controlled generator 20 carrying frequency is controlled by the microprocessor 15 through the unit 31 of data exchanges for closing of loops of tracking behind frequency and phase carrying frequency of an input signal. Thus a frequency rate of an output signal shaped by the digital controlled generator 20 carrying frequency, establish in conformity with the data stored in a ROM 16.

After "removal" of carrying frequency in digital mixers 25 and 26 inphase and quadrature component of a signal correlate in groups from K correlators $27_1$ - $27_K$ and $28_1$ - $28_K$ with the appropriate copies reference C/A of a code shifted on time in respect of each other on half of a digit C/A of a code GPS.

Used in activity of correlators $27_1$ - $27_K$ and $28_1$ - $28_K$ copies of reference code C/A codes are shaped with the help of a programmed delay line 24, generator 23 reference C/A of a code GPS and digital controlled generator. Thus with the help of the digital controlled generator 22 codes one generates a cadence C/A of a code (1,023 MHz), which submit on the appropriate input of the generator 23 reference C/A of a code GPS. Selection of value of a clock rate of a code is executed pursuant to commands of the calculator 15, coming to a control input of the generator 22 through the unit 31 data exchanges. Basing on a cadence C/A of a code coming from an output of the digital controlled generator 22 codes, the generator 23 reference C/A of a code generates reference C/A a code for processing in the given channel 14 signals of the appropriate satellite GPS, which is unique for each satellite GPS. Selection of a code, that is selection of a certain pseudo-random code sequence (PRC), is executed pursuant to commands of the calculator 15, coming to the first input of the generator 23 through the unit 31 data exchanges, and commands coming to the second input of the generator 23 from the second outputs of the register 21 controls. Generated by the generator 23 reference code C/A gees to a programmed delay line 24, in which shift reference code C/A is executed for certain time intervals in conformity with control signals shaped by the register 21 controls. The temporal algorithm of activity of a programmed delay line 24 is set by control signals shaped by the register 21 controls on the basis of commands, coming from the calculator 15 through the unit 31 for data exchanges.

Copies of reference C/A code shaped at the output of delay line 24 go to the second inputs of correlators $27_1$ - $27_K$ and $28_1$ - $28_K$.

The results of correlation processing which is carried out in correlators $27_1$ - $27_K$ and $28_1$ - $28_K$, are accumulated in the appropriate storage units $29_1$ - $29_K$ and $30_1$ - $30_K$ on a time interval equal to duration of epoch of a code (1 msec.), are read out by the processor 15 through the unit 31 data exchanges in a RAM 17 and use for closing of loops of code tracking and tracking of carrying frequency of a processed signal.

By results of correlation signal processing GPS, made in each of channels of 14 digital correlator 13, with the help of the processor 15 a position-fix is executed, the data about which then go to the unit 10.

The activity of the microprocessor 15 units 5 depending on conditions of a signal reception GPS implements on one of three considered below algorithms.

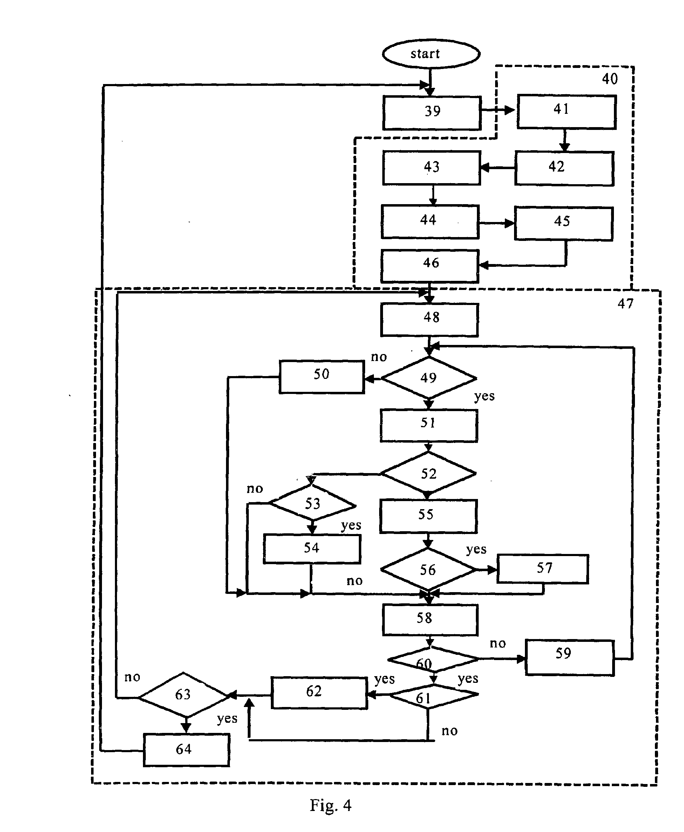

The first algorithm (Fig. 4) is used in a usual terms of a signal reception GPS at absence of interlock, i.e. at the ratio of a signal strength to a spectral concentration of a noise it is more than 34 through 37 dBHz. This is a standard threshold signal to noise ratio for the conventional receiver GPS. In using this algorithm the means of the unit 5, i.e. units 13 - 17, should be involved.

The first algorithm consists in the following. In the beginning visible satellites (unit 32) are being determined, then synchronization of GPS signals (unit 33) should be executed.

The synchronization includes calculation of range of searching for on frequency and delay (unit 34), searching for of signals of visible satellites on frequency and delay (unit 35), acquisition of a signal by tracking systems behind a code and phase carrying frequency (unit 36), symbolical synchronization of GPS signals (unit 37), field synchronization of GPS signals (unit 38) and reception of ephemerises of visible satellites (unit 39).

Then execute tracking of GPS signals (unit 40). The tracking includes the installation of number of the first visible satellite (unit 41), entering in tracking a code (unit 42), installation of an attribute of interlock of a signal of the given visible satellite (unit 43), tracking a code (unit 44), entering in tracking a phase carrying frequency (unit 45), entering in tracking frequency (unit 46) and frequency lock loop (unit 47), tracking a phase carrying frequency (unit 48), determination of necessity of updating of ephemerises (unit 49), reception of ephemerises (unit 50), measurement of pseudo-range and Doppler frequency shift (unit 51), modification of number of a visible satellite (unit 52) by results of signal processing of all visible satellites (unit 53), determination of number of the not disabled visible satellites, sufficient for the solution of a navigational task (unit 54), solution of a navigational task (unit 55), determination of necessity of change of visible satellites (unit 56), preparation to change of disabled satellites, if they are (unit 57).

The results of the solution of a navigational task submit to the unit 10 input-outputs of the data, for example, for indication of position. In case of necessity (in extreme situations) the position data together with the alarm signals are transmitted with the help of the unit 11 on communication channel to a base station 12.

The characteristic feature of the given algorithm consists in following. If in usual algorithms installed in output units of conventional receivers, including the receiver - prototype, the "interlocked" signal is the signal of a satellite, for which the tracking of code and phase carrying frequency is lost, and the updating of ephemerises takes place at 30 minutes interval, and change of constellations - irrespective of interlock, then, in the claimed receiver, after the loss of tracking of the phase by means of an automatic phase lock loop ( PLL) the other system for tracking frequency - a frequency lock loop (FLL) - is activated and, if the system FLL loses tracking, the tracking of code goes on. The signal is considered to be "interlocked", if the tracking of a code is lost. Thus, by the appropriate selection of parameters of a system FLL and tracking system of a code it is possible to continue to monitor the object in conditions of failure to track a phase carrying frequency. Thus, as against tracking a phase, there is no periodic (one time in 30 minutes) updating of ephemerises, however, if updating of ephemerises does not takes olace within the limits of 1 to 2 hours, the deterioration of accuracy is unsignificant. Practically, the claimed receiver is capable to keep tracking frequency of previously locked GPS signals with the help of a system FLL with mid-square error of 7 to 15 Hz and tracking a code with mid-square error up to 20 m. (even at width of an interval between early and late copies of a code equal to one digit C/A of a code up to a signal/noise ratio 17 to 20 dBHz at a unilateral band of follow-up systems of 0.5 to 1 Hz. It allows to continue position-fix on current working constellation without changing operational mode of the receiver.

Other difference of the considered algorithm from conventional is that at presence of interlock and necessity of change of visible satellites the change only of completely disabled satellites implements.

The second algorithm use in extreme situations in cases, when the interlock of GPS signals arises during activity of the receiver, when there is no the solution of a navigational task by the first algorithm, and thus there is a necessity for change of working constellation. At realization of this algorithm apart from means of the unit 5 use a ROM 18 and RAM 19, units 10 and 11, and also information support on the part of a base station 12 as ephemerises on satellites of new constellation. The necessity of such information support is called by that in the said conditions of interlock (at a low signal to noise ratio) the ephemerises can not be adopted by the receiver independently, so PLL in these conditions does not operate. The second algorithm use at presence of the exact data obtained by results of the previous activity of the receiver with use of the first algorithm. Thus, the necessary structure of the exact data includes the data about a place (with accuracy of 1,5 kms or 3 kms accordingly at number K = 20 or K = 40 quadrature correlators $27_1$ - $27_K$ and $28_1$ - $28_K$ in each of channels 14), estimation of Doppler shift of frequency and frequency drift of the reference generator of the former 4 (with accuracy of $\pm$ 10 Hz), data about time (with accuracy $\pm$1 msec.), and also data about ephemerises on new satellites obtained by the inquiry (or on the alarm signal) from a base station 12. These data allow to execute fast (trackless) lock of signals on a code and frequency and to determine coordinates of site in, approximately, 1 sec, i.e. same as in the prototype.

The essence of the given algorithm allowing to execute said accelerated position-fix in said conditions, is that the correlators $27_1$ - $27_K$ and $28_1$-$28_K$ of channels $14_1$ -$14_N$ are arranged around of computational pseudo-range, then execute accumulation (memorizing in a RAM 19) of millisecond samples (inphase Ii and quadrature Qi) c of outputs each of the quadrature correlators (i) of channels $27_1$ - $27_K$ and $28_1$ - $28_K$ on an interval 1 sec., then, taking into consideration, the position of margins of digits of the information evaluate modules (or squares of modules) under the formula:

$$\rho^2 = \sum_{1}^{M/20}\left[\left(\sum_{1}^{20}I_i\right)^2 + \left(\sum_{1}^{20}Q_i\right)^2\right], \qquad 1)$$

All these operations make concerning each channel 14, i.e. for each visible satellite GPS, which signals are processed in the receiver. As the mentioned above a priori data are exact, these maxima characterize a real position of peak of a correlation function and there is no need to shift PSP (ΠCΠ) on any other temporal position.

As was already spoken above, in the claimed receiver, as against the prototype, one accumulates not samples in an output of the unit 3 analog-to-digital conversions going with a clock rate Ft, but millisecond samples in an output of quadrature correlators $27_1$ - $27_K$ and $28_1$ - $28_K$, thus a correlation is executed not by means of software, as in the prototype, but by means of hardware - only by means of the correlator 13.

As in the data conditions it is enough only once to accumulate samples on an interval 1 sec., not shifting PSP (ПСП) for any other temporal position, no loss of time in determination of coordinates takes place in the claimed receiver in comparison with the prototype.

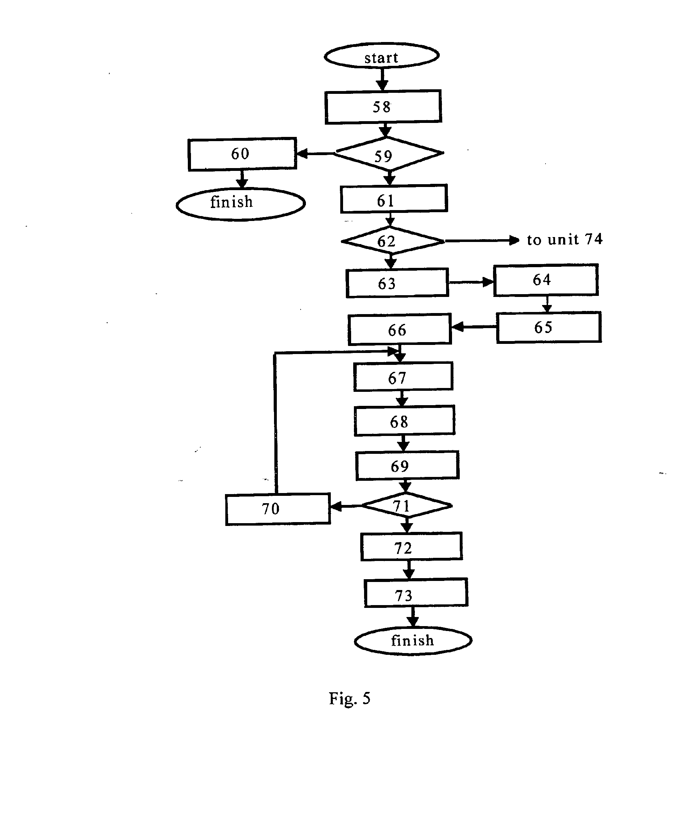

The essence of the second algorithm and operational sequence is illustrated the unit by the scheme of algorithm, introduced on Fig.5. The operational sequence following.

After formation with the help of the unit 10 alarm signals (unit 58), decide a navigational task by the considered above methods (unit 59) on the first algorithm. In case of the positive solution of a task execute transmission of the alarm signal and coordinates of site to a base station 12 on communication channel (unit 60). In case of impossibility of the solution of a task by methods of the first algorithm in the beginning execute only transmission of the alarm signal on a base station (unit 61). Then, in that case, when there are exact a priori data, i.e. data of a place, estimation of frequency of the reference generator, correct time, the Doppler shifts of carrier frequencies (unit 62), execute a reception of ephemerises on visible satellites on communication channel with a base station 12 (unit 63).

After that execute the installation of channels 141 - 14N of the digital correlator 13 (i.e. digital controlled generators 22 codes, digital controlled generators 23 C/A of a code GPS and digital controlled generators carrying frequency 20 channels) under the exact data and ephemerises on the satellite (unit 64), thus mean of K quadrature correlators $27_1$ - $27_K$ and $28_1$ - $28_K$ of each channel 141 -14N establish on the calculated values of delay and frequency carrying frequency.

Further one executes an accumulation of samples (inphase I and quadrature Q) from outputs of correlators

$27_1$ - $27_K$ and $28_1$ - $28_K$ of all channels 14 on a time interval 1 sec, i.e. M = 1000 samples (unit 65), installation of number of the first satellite for the first channel 141 (unit 66), finding of modules of accumulation in each quadrature correlator for 1 sec. in view of margins of digits (unit 67). Thus, at finding of modules of accumulation on an interval equal to duration of a digit 20 msec., the samples in quadrature channels are accumulated coherently, i.e. fold in conformity with the formula (1).

Further one executes finding of two correlators with maximum modules, i.e. find the first and second maxima (unit 68), then executes interpolating peak of a correlation and finding quazi-range (unit 69) for this satellite on algorithm similar to that used in [9].

Further process repeat at the installation of numbers of following satellites (unit 70). Process is repeated till the accumulation in all channels $14_1$ - $14_N$ (unit 71) are processed.

After that one solves a navigational task (unit 72) and transmits a locating information to a base station 12 (unit 73).

In the event that at realization of the second algorithm there are no exact a priori data (Fig.5, the unit 62) or receiver for the first time is actuated in conditions of interlock of a signal, detection of signals does not occur, and the further activity implements on the third algorithm.

The conditions of realization of the third algorithm are characterized by that there are no data, except for, maybe, rough time given by internal hours of the microprocessor 15 (if the error is 1 minute, it gives an error in an estimation of Doppler shift of frequency of signals of 60 Hz, if 1 second - that 1 Hz). Therefore with the help of units 10, 11 one executes the reference to a base station 12, in reply to which numbers of visible satellites, ephemeris on visible satellites are provided, the data about time (with accuracy of 1 second) and data about a place (with accuracy are not worse than 150 km).

If the base station is in radius of $\pm$150 km (but no more), the a priori location co-ordinates are given with same accuracy. It allows to provide the sanction of a multivalence in samples of pseudo-range without symbolical and field synchronization. It is explained by that the period C/A of a code 1 msec. corresponds to width of a phase path of 300 km, and the known condition of the sanction of a multivalence corresponds to 1/2 width of a phase path. As, as is known, 1 km of an error on a place results in 1 Hz of an error in an estimation of Doppler shift of frequency, it results in necessity to search for a signal not only on delay, but also on frequency to ensure coherent accumulation of the information (inphase samples I and quadrature samples Q) on intervals 4 to 20 msec. Thus the error on frequency at 20 msec. should be no more than 15 Hz, at 10 msec. - no more than 30 Hz, at 4 msec. - no more than 70 Hz, large power losses differently take place. Taking into account said, optimum for realization of the given algorithm, the arrangement of the receiver in radius up to 30 km from a base station is. All said true and for the prototype executing determination site in similar conditions, however the description of the prototype is silent about it.

Besides, in the said conditions to ensure acceptable time for position-fix on GPS signals, from a base station 12 a high-stable sinusoidal synchronizing signal can be received, in relation to which one evaluates deviation of frequency of the reference generator of the former 4 from a rated value. The alternative solution - tuning of frequency of the reference generator on a synchronizing signal. The synchronizing signal is not required, if one uses as the reference generator , like it is done in the prototype, an expensive high-stable reference generator ("TXCO") with stability ratio not worse than 0.1 ppm (peak program meter).

After obtaining the said data from a base station 12 to the necessary information and having defined a frequency drift of the reference generator (or having set it up), with the help of the microprocessor 15 one calculates values of Doppler shift of frequency of signals of visible satellites and sends to digital controlled generators 20 carrying frequency in each of channels of 14 digital correlators 13 values of carrier frequencies of the appropriate visible satellites in view of the calculated Doppler shifts, placing thus channels 14 on all visible satellites.

In channels 14 so arranged one executes arrangement of correlators $27_1$-$27_K$ and $28_1$ - $28_K$. Arrangement of correlators $27_1$ - $27_K$ and $28_1$ - $28_K$ is executed by temporal shift of reference codes shaped by a programmed delay line 24, on 1/2 digits C/A of a code. In this case, at K = 20 to 40 correlators $27_1$ - $27_K$ and $28_1$ - $28_K$, used in channels 14, overlap of 10 to 20 digits. As the period C/A of a code 1023 digits, and position of a time scale of the receiver concerning a time scale of a system GPS is not known (since there was no solution of a navigational task earlier), for a signal search sequentially, by shift of the said correlators of channels on 10 to 20 digits. Maximum number of shifts 50 to 100 sec. As the samples from an output of the digital correlator 13 are accumulated during 1 sec, maximum time of detection of signals is 50 to 100 сек. The mean time is twice less, i.e. 25 to 50 sec.

The said temporal costs is that price, which it is necessary to pay for a capability of a position-fix in the data conditions at essential simplification of the claimed receiver. However, practically, said temporal costs at a position-fix in the data conditions are not essential from a point of view of realization by the functional receiver.

In considered here third algorithm the summation of samples for different positions of prospective margins of digits implements, i.e. with shift on 1 msec in range 0 through 19 msec, and there are global maxima not only on shifts of a beginning of a period C/A of a code, but also on shifts of margins of digits.

The considered third algorithm is realized in a case, when accuracy of calculation of Doppler shift of frequencies and account of a frequency drift of the reference generator give one frequent position. (If the accuracy is worse, the algorithm should be added by searching for on different frequent positions, that here is not considered.

The essence of the third algorithm and operational sequence is illustrated by the scheme of algorithm, presented on Fif.6. The operational sequence at realization of the third algorithm is following.

In the beginning one executes a data reception from a base station 12 on communication channel (unit 74). The ephemerises enter in a structure of the data, numbers of visible satellites and location co-ordinates with accuracy not worse than 150 km (it is desirable, as it was marked above, with accuracy it is not worse than 25 to 30 km, that the error of determination of Doppler shift was not worse than 30 Hz). Also lock the indication of deflection of frequency of the reference generator of the former 4 from a rated value, that is determined by its shift in relation to a high-stable reference signal received on communication channel from a base station 12 (units 75). In alternative version, when the tuning of frequency of the reference generator implements pursuant to frequency of this external high-stable signal, value of the said deviation is taken as zero.

Execute the installation of channels of 14 digital correlator 13 on a calculated data about value of carrier frequencies of satellites (unit 76), i.e. installation of digital controlled generators 20 carrying frequency, then set-up of elements of channels of 14 digital correlator 13, determining range, on the first temporal position (unit 77). Thus all K = of 20 to 40 quadrature correlators $27_1$ - $27_K$ and $28_1$ - $28_K$ is placed with a step of 1/2 digits C/A of a code, overlapping, thus, interval of 10 to 20 digits (all of digits in a period C/A of a code 1023).

Collecting of samples is executed in a RAM 19 - simple memorizing on an interval 1 sec. (unit 78), then - evaluate modules or their squares for each correlator of each channel 14 for different positions of prospective margins of digits of the information (unit 79). It is required because of absence of the data on precise time, and ephemerises are not enough for delimitation of digits, and, if they are unknown, it is impossible to execute coherent accumulation of samples on an interval 1 = 4 to 20 msec.

Evaluation of modules is executed in conformity with expression:

$$\rho_{ji}^2 = \sum_1^{M/l} \left[ \left( \sum_1^l I_i \right)_j^2 + \left( \sum_1^l Q_i \right)_j^2 \right] \qquad (2)$$

Where: i = number of sample, i = 1 through 1000;

j - assumed position of margin of digits of the information, j = 0 through 19 msec;
1 - duration of an interval of coherent processing of a signal, 1 = 4 to 20 msec.

Further takes place the finding of two global maxima of modules in each channel of 14 digital correlators 13 - i.e. on each satellite - (unit 80), then their comparison with a threshold is executed for fixing of detection (unit 81). If the signal is not detected, one executes shift C/A of codes in generators 23 channels 14 on 10 20 digits (unit 82) and all cycle of operations sold by units 78 - 81, is repeated.

After finding and the fixing of the said maxima for all satellites (unit 83) one executes interpolation of peak of a correlation and calculation of pseudo-range (unit 84), solution of a navigational task (unit 85) and transmission of coordinates to the base station 12 (unit 86).

So the claimed receiver operates under different conditions of a signal reception GPS, including in conditions of interlock. It allows to execute transmission of alarm signals (in case of originating extreme situations) with a locating information even in that case, when the signal to noise ratio of received GPS signals lies below standard threshold value. It allows to use the claimed receiver for operations " under foliage ", in conditions of tilting, etc.

From the above it is evident, that the claimed invention is feasible, industrially applicable and solves the problem of creation of the receiver of GPS signals for a system of personal safety distinguished, in comparison with the prototype, by the ease of realization, lower power consumption, smaller overall dimensions and weight, lower cost (due to exclusion of functional units 7 - 9 of the prototype, which are power consuming), that is especially important for a mass consumer. Thus the fulfillment by the claimed receiver of all necessary functions related to a position-fix of the receiver is provided including the operational capability of working in conditions of interlock of a signal GPS, when its power on 15 to 20 db is less than nominal power - 164,5 db*W, that allows to realize the main feature of the receiver as the receiver of GPS signals for a system of personal safety.

The achieved essential simplification and cost reduction of the receiver with preservation of all functions makes it perspective for use in communication systems developed for securing personal safety of the people.

**Claims**

1. The portable GPS-receiver for a system of personal safety containing sequentially connected input and output units of the conventional receiver of GPS signals, input-output unit of the data and transceiver unit intended for a reception and a transmission of data through communication channel, linking the receiver with a base station, output of which reference signal is connected to a reference input of an input unit, the clock input of the output unit is connected thus to a clock output of an input unit, the input unit contains sequentially connected radio frequency converter, which signal input is a signal input of an input unit, and unit of analog-to-digital conversion of signals, which output is a signal output of an input unit, and also the former of signals clock and heterodyne frequencies, which reference input is a reference input of an input unit, the heterodyne output of the former of signals clock and heterodyne frequencies is connected to a heterodyne input of the radio frequency converter of signals, and the clock output being a clock output of an input unit, is connected to a clock input of the unit of analog-to-digital conversion of signals *characterized in that* the output unit of the conventional receiver of GPS signals the unit containing multichannel digital correlator with N = by 8 to 12 channels of parallel processing connected with the microprocessor equipped constant storage for storage of the programs of signal processing and operative storage for data storage is used by activity in a standard mode without interlock of GPS signals, thus the microprocessor of the output unit is connected by trunks of a data exchange to the former of signals clock and heterodyne frequencies of an input unit, with an input-output unit of the data, with the transceiver unit and in addition by gated in permanent storage for storage of the programs of signal processing and operative storage for data storage and samples of the multichannel digital correlator by activity in conditions of interlock of GPS signals, and each of N of channels of the multichannel digital correlator is equipped K inphase and K quadrature correlators, where K = 20 to 40, connected with the appropriate storage units ensuring a capability of a simultaneous correlation of GPS signals with K copies of C/A code, shifted on half of digit of C/A code of GPS, and coherent accumulation of results of a correlation on an interval equal to duration of epoch of C/A code.

2. The receiver as in claim 1 *characterized in that* each of channels of the multichannel digital correlator contains the digital controlled generator carrying frequency, register of control, digital controlled generator of a code, generator reference C/A GPS code, programmed delay line, first and second digital mixers accordingly of inphase and quadrature channels of processing, first and second groups from K inphase and quadrature correlators, which first inputs are connected to outputs of the appropriate digital mixers, the second inputs are connected to the appropriate outputs of a programmed delay line, and the outputs are connected to signal inputs of the appropriate storage units, and also unit of a data exchange linking outputs of storage units, control input of the digital controlled generator of carrying frequency, control input of the register of control control input of the digital controlled generator of a code and first input of the generator of reference C/A code with the microprocessor of the output unit, thus linked with each other signal inputs of digital mixers form a signal input of a channel, linked with each other clock inputs of the digital controlled generator of carrying frequency, digital controlled generator of a code of a programmed delay line and storage units form a clock input of a channel, the second inputs of the first and second digital mixers are connected accordingly to the first and second outputs of the digital controlled generator carrying frequency, signal and control the inputs of a programmed delay line are connected accordingly to an output of the generator reference C/A of a code GPS and to the first output of the register of control, the second output of the register of control is connected to the second input of the generator reference C/A GPS code, and the third input of the generator of reference C/A GPS code is connected to an output of the digital controlled generator of a code, thus in the multichannel digital correlator linked with each other signal inputs of channels and linked with each other clock inputs of channels form accordingly signal and clock inputs of the multichannel digital correlator.

Fig. 1

**Fig. 2**

Fig. 3

Fig. 4

Fig. 5

from unit 62

```
        ┌──────────┐
        │    74    │
        └──────────┘
             │
        ┌──────────┐
        │    75    │
        └──────────┘
             │
        ┌──────────┐
        │    76    │
        └──────────┘
             │
        ┌──────────┐
        │    77    │
        └──────────┘
             │
        ┌──────────┐
        │    78    │
        └──────────┘
             │
        ┌──────────┐
        │    79    │
        └──────────┘
             │
        ┌──────────┐
        │    80    │
        └──────────┘
             │
        ┌──────────┐
        │    81    │
        └──────────┘
             │
┌──────┐   ◇──────◇
│  82  │◄──│  83  │
└──────┘   ◇──────◇
             │
        ┌──────────┐
        │    84    │
        └──────────┘
             │
        ┌──────────┐
        │    85    │
        └──────────┘
             │
        ┌──────────┐
        │    86    │
        └──────────┘
             │
          ( finish )
```

Fig. 6